# EUROPÄISCHE PATENTSCHRIFT

(11) **EP 2 570 033 B1**
(45) Veröffentlichungstag und Bekanntmachung des Hinweises auf die Patenterteilung: **19.11.2014**
(21) Anmeldenummer: 12183042.6
(22) Anmeldetag: 05.09.2012
(51) Int. Cl.: A23G 4/08, C08L 31/04

(54) **Nicht klebende Kaugummigrundmasse, daraus hergestellte Kaugummizubereitung und Verfahren zu ihrer Herstellung**
Non-tack gum base, chewing gum preparation produced therefrom and methods for production thereof
Masse de base pour gomme à mâcher non collante, préparation de gomme à mâcher fabriquée à partir de cette masse et son procédé de fabrication

(30) Priorität: 19.09.2011 DE 102011082981
(43) Veröffentlichungstag der Anmeldung: 20.03.2013
(73) Patentinhaber: Wacker Chemie AG, 81737 München (DE)
(72) Erfinder: Wimmer, Thomas, Dr., 84489 Burghausen (DE); Gruber, Sabine, 84529 Tittmoning (DE)
(74) Vertreter: Potten, Holger

(56) Entgegenhaltungen:
- EP-A1- 1 702 516
- WO-A1-96/20609
- WO-A1-2006/066575
- WO-A1-2008/119674
- US-A- 4 352 822
- US-A1- 2007 042 079

## Beschreibung

Die Erfindung betrifft eine nicht klebende Kaugummigrundmasse, sowie Verfahren zu Ihrer Herstellung.

Kaugummizubereitungen bestehen üblicherweise aus einem wasserunlöslichen Teil, der sog. Kaugummigrundmasse auch Gumbase genannt, und einem wasserlöslichem Teil (Zucker oder Polyole/Zuckeralkohole), der in geringer Menge Geschmacksstoffe, Süßungsmittel und gegebenenfalls Farbstoffe oder Antioxidantien enthält.

Typischerweise enthalten Gumbaseformulierungen Elastomere (wie z.B. Polyisobutylen, Butylrubber, Styrol-Butadien-Kautschuk oder Naturkautschuk), Polyvinylacetat, Polyterpene oder Ester der Kolophoniumharze, Füllstoffe, Weichmacher, Fette (teilweise gehärtete Pflanzenfette) oder Wachse (Parafinwachse, mikrokristalline Wachse) sowie Emulgatoren und Weichmacher.

US 5116626 beschreibt eine transparente Kaugummigrundmasse / Kaugummizubereitung bestehend nahezu ausschließlich aus Polyvinylacetat, Polyisobutylen, Vinyllaurat-Vinylacetat-Copolymeren und einem Weichmacher.

Ein nicht klebender Kaugummi, der durch den Verzicht auf Polyterpene in der Kaugummigrundmasse charakterisiert ist, wird in US5538741 beschrieben.

US2007/042079A1 beschreibt eine Kaugummigrundmasse und eine Kaugummi mit verringerter Klebrigkeit umfassend Polyvinylacetat, Vinylacetat, Triacetin und Polyisobutylen.

WO2008/119674 beschreibt eine homogene Zusammensetzung aus Polyvinylacetat, Vinylacetat-Vinyllaurat-Copolymer und eine Kaugummigrundmasse umfassend diese Zusammensetzung und Kolophoniumharz als Weichmacher.

Aufgabe der vorliegenden Erfindung ist es, eine Kaugummigrundmasse und basieren auf dieser Grundmasse eine Kaugummizubereitung zur Verfügung zu stellen, die weniger klebrig ist, als bekannte Kaugummigrundmassen / Kaugummizubereitungen.

Die erstgenannte Aufgabe wird gelöst durch eine homogene Zusammensetzung bestehend aus Polyvinylacetat in einer Menge von 25 - 90 Gew.-%, Vinyllaurat-Vinylacetat-Copolymer in einer Menge von 5 - 70 Gew.-%, sowie einem Weichmacher in einer Menge von 1% - 15 Gew.-% jeweils bezogen auf das Gesamtgewicht der Zusammensetzung.

Vorzugsweise besteht die homogene Zusammensetzung zu 30 - 70 Gew.-%, besonders bevorzugt zu 43 - 60 Gew.-% aus Polyvinylacetat (PVAc) und zu 20 - 50 Gew.-%, besonders bevorzugt zu 30 - 45 Gew.-% aus Vinyllaurat-Vinylacetat-Copolymer (VL/VA-Copolymer). Der Weichmacher ist bevorzugt in einer Menge von 5 - 13 Gew.-% vorhanden.

Alle Gew.-% Angaben sind bezogen auf das Gesamtgewicht der jeweiligen Zusammensetzung. Die in Gew.-% benannten Einsatzmengen der Bestandteile einer Rezeptur addieren sich jeweils auf 100 Gew.-%.

Bevorzugt werden Polyvinylacetate mit einem gewichtsmittleren Molekulargewicht Mw von 10.000 bis 60.000, besonders bevorzugt 15.000 bis 50.000. Das gewichtsmittlere Molekulargewicht Mw wurde bestimmt mittels Size Exclusion Chromatography (SEC) gegen Polystyrol-Standard, in THF, bei 40°C, Flow Rate 1,2 ml/min. Es können auch Gemische von Polyvinylacetaten mit unterschiedlichem Molekulargewicht eingesetzt werden.

Das Vinyllaurat-Vinylacetat-Copolymerisat besitzt vorzugsweise ein gewichtsmittleres Molekulargewicht Mw von 100.000 bis 600.000, besonders bevorzugt 150.000.bis 400.000. Das Vinyllaurat-Vinylacetat-Copolymerisat enthält vorzugsweise 15 bis 60 Gew.-%, Vinyllaurat-Einheiten und 40 bis 85 Gew.-% Vinylacetat-Einheiten, besonders bevorzugt 35-45 Gew.-% Vinyllaurat-Einheiten und 55 bis 65 Gew.-% Vinylacetat-Einheiten. Es können auch mehrere Vinyllaurat-VinylacetatCopolymere mit unterschiedlicher Copolymerisat-Zusammensetzung und/oder unterschiedlichem Molekulargewicht eingesetzt werden.

Der Weichmacher ist vorzugsweise ausgewählt aus der Gruppe Diacetin, Triacetin, Acetem, Glycerinmonostearat. Als Weichmacher bevorzugt wird Triacetin oder Acetem, besonders bevorzugt wird Triacetin.

Die erfindungsgemäße homogene Zusammensetzung eignet sich bevorzugt als Kaugummigrundmasse, die Erfindung betrifft daher auch die Verwendung einer erfindungsgemäßen Zusammensetzung als Kaugummigrundmasse.

Diese Kaugummigrundmasse sowie ein daraus hergestellter Kaugummi sind weniger klebrig z.B. an Textilien und "urbanen" Oberflächen wie Asphalt oder Beton. Zudem ist die erfindungsgemäße Kaugummigrundmasse leicht in einem physiologisch unbedenklichen Lösungsmittel wie z.B. Ethanol löslich, was eine Reinigung von mit Kaugummi verschmutzten Textilien oder anderen Oberflächen erleichtert. Ferner weist die erfindungsgemäße Kaugummigrundmasse sowie daraus hergestellte Kaugummizubereitungen eine verbesserte Freisetzung von Geschmacksstoffen auf, als bekannte Kaugummigrundmassen/Kaugummizubereitungen.

Die erfindungsgemäße Kaugummigrundmasse kann durch ein für derartige Massen übliches Verfahren, in aller Regel ein Knetverfahren hergestellt werden. Die Herstellung kann kontinuierlich z.B. in einem Extruder oder diskontinuierlich z.B. in einem Doppel-Z-Kneter erfolgen. Sie erfolgt vorzugsweise bei einer Temperatur von 80 - 130°C, bevorzugt 90 - 120°C über einen Zeitraum von 30 bis 100 Minuten.

Dazu geeignete Polyvinylacetate und geeignete Vinyllaurat-Vinylacetat-Copolymerisate sind im Handel erhältlich, beispielsweise die VINNAPAS^{®}-Festharze der Wacker Chemie AG. Die Polyvinylacetat-Komponente und die Vinyllaurat-Vinylacetat-Copolymerisat-Komponente können in bekannter Weise mittels Masse- oder Lösungspolymerisation hergestellt werden. Ein geeignetes Verfahren ist beispielsweise in der EP 1352914 B1 beschrieben. Dazu werden die entsprechenden Monomere in Gegenwart von Initiatoren wie Peroxid- oder Azo-Initiatoren, gegebenenfalls in einem meist alkoholischen Lösungsmittel und gegebenenfalls in Gegenwart von Reglern, bei einer Temperatur von im Allgemeinen 40°C bis 140°C polymerisiert, und gegebenenfalls Lösungsmittel und Regler sowie Restmonomer abdestilliert.

Die Herstellung der erfindungsgemäßen Kaugummigrundmasse kann direkt aus den 3 Komponenten erfolgen. Alternativ kann sie durch die Herstellung eines flüssigen sowie eines festen Preblends und anschließendes Vermischen dieser Preblends vorzugsweise im Gewichtsverhältnis flüssiger : fester Preblend = 1 : 5.5, erfolgen.

Der flüssige Preblend besteht aus dem VL/VA-Copolymer und dem Weichmacher im Gewichtsverhältnis 1:2 bis 2:1. Er wird durch Vermischen der beiden Komponenten im genannten Mischungsverhältnis hergestellt.

Der feste Preblend besteht aus PVAc und VL/VA-Copolymer. Er kann durch Vermischen der Schmelzen von Polyvinylacetat und des Vinylacetat-Vinyllaurat-Copolymeren bei 80 - 140 °C hergestellt werden. Alternativ kann der feste Preblend durch 2-stufige Lösungspolymerisation hergestellt werden. Seine Herstellung und mögliche Zusammensetzung wird in US 2008241314 A2 beschrieben, auf die dortigen Angaben wird insoweit Bezug genommen.

Die Herstellung der Kaugummigrundmasse unter Einsatz eines flüssigen Preblends ermöglicht ein leichteres Handling und eine leichtere Dosierung des Copolymers und ist von daher bevorzugt.

Die Herstellung eines Kaugummis aus der Kaugummigrundmasse erfolgt üblicherweise bei ca. 60°C unter Zugabe von Zucker, Syrup, Geschmacksstoffen und gegebenenfalls Farbstoffen, Fruchtsäuren, Süßstoffen, Feuchthaltemitteln. Zuckerfreier Kaugummi wird analog aus Kaugummigrundmasse, Polyolen (Zuckeralkohol, auch als Bulk-Süssungsmittel bezeichnet), Geschmacksstoffen, Süßstoffen und gegebenenfalls Farbstoffen, Fruchtsäuren, Feuchthaltemitteln hergestellt. Die Zugabe erfolgt in derartigen Mengen, das die im Folgenden genannte Zusammensetzung erhalten wird.

Die erfindungsgemäße Kaugummigrundmasse wird, gegebenenfalls auf 40-60°C erwärmt und mit den anderen Kaugummizutaten bei 45-65 °C zu einem Teig gemischt. Dies kann beispielsweise in einem beheizbaren Doppel-Z-Kneter oder in einem Extruder erfolgen. Anschließend wird die Kaugummimasse durch übliche Verfahren geformt. Zur Formung dienen dem Fachmann bekannte, kontinuierliche Verfahren wie Extrusion, Co-Extrusion, Walzen oder Schneiden. Als mögliche Formen kommen Streifen, Slabs, Pellets, Bänder oder Hohlkugeln in Betracht.

Bei den Polyolen handelt es sich vorzugsweise um Sorbitol, Mannitol, Maltitol, Isomalt, Xylitol, Eryhthritol oder eine Mischung dieser Verbindungen.

Die folgenden Beispiele dienen der weiteren Erläuterung der Erfindung:

### Beispiel 1: Herstellung einer Kaugummigrundmasse

In einem beheizbaren Doppel-Z-Kneter wurden 550 g homopolymeres PVAc (käuflich erhältlich bei der Wacker Chemie AG unter der Bezeichnung VINNAPAS B 1.5 sp; Mw 15.000) bei 120 °C zusammen mit 380 g Vinylacetat-Vinyllaurat-Copolymer (Monomer-Verhältnis-Gewicht: 60:40; (käuflich erhältlich bei der Wacker Chemie AG unter der Bezeichnung VINNAPAS B 500/40 VL) aufgeschmolzen und mit 70 g Triacetin vermischt. Die Mischung wurde aus dem Kneter entnommen und auf Raumtemperatur abkühlen gelassen.

### Beispiel 2: Herstellung einer Kaugummigrundmasse

In einem beheizbaren Doppel-Z-Kneter wurden 450 g homopolymeres PVAc (käuflich erhältlich bei der Wacker Chemie AG unter der Bezeichnung VINNAPAS B 30 sp; Mw 50.000) bei 125 °C zusammen mit 470 g Vinylacetat-Vinyllaurat-Copolymer (Monomer-Verhältnis-Gewicht: 60:40; (käuflich erhältlich bei der Wacker Chemie AG unter der Bezeichnung VINNAPAS B 500/40 VL) aufgeschmolzen und mit 80 g Triacetin vermischt. Die Mischung wurde aus dem Kneter entnommen und auf Raumtemperatur abkühlen gelassen.

### Beispiel 3: Herstellung einer Kaugummigrundmasse

In einem beheizbaren Doppel-Z-Kneter wurden 560 g homopolymeres PVAc (käuflich erhältlich bei der Wacker Chemie AG unter der Bezeichnung VINNAPAS B 5 sp; Mw 25.000) bei 110 °C zusammen mit 370 g Vinylacetat-Vinyllaurat-Copolymer (Monomer-Verhältnis-Gewicht: 60:40; käuflich erhältlich bei der Wacker Chemie AG unter der Bezeichnung VINNAPAS B 500/40 VL) aufgeschmolzen und mit 70 g Triacetin vermischt. Die Mischung wurde aus dem Kneter entnommen und auf Raumtemperatur abkühlen gelassen.

### Beispiel 4: Herstellung einer Kaugummigrundmasse

In einem beheizbaren Doppel-Z-Kneter werden 460 g homopolymeres PVAc (VINNAPAS B 17 sp; Mw 40.000) bei 125 °C zusammen mit 450 g Vinylacetat-Vinyllaurat-Copolymer (Monomer-Verhältnis-Gewicht: 60:40; VINNAPAS B 500/40 VL) aufgeschmolzen und mit 90 g Triacetin vermischt. Die Mischung wird aus dem Kneter entnommen und auf Raumtemperatur abkühlen gelassen.

### Beispiel 5: Herstellung einer Kaugummigrundmasse

In einem beheizbaren Doppel-Z-Kneter wurden 430 g homopolymeres PVAc (käuflich erhältlich bei der Wacker Chemie AG unter der Bezeichnung VINNAPAS B 1.5 p; Mw 15.000) bei 125 °C zusammen mit 450 g Vinylacetat-Vinyllaurat-Copolymer (Monomer-Verhältnis-Gewicht: 80:20; käuflich erhältlich bei Wacker Chemie AG unter der Bezeichnung VINNAPAS B 500/20 VL) aufgeschmolzen und mit 120 g Essigsäureester von Monoglyceriden käuflich erhältlich bei DANISCO unter der Bezeichnung Grinsted^{©}Acetem vermischt. Die Mischung wurde aus dem Kneter entnommen und auf Raumtemperatur abkühlen gelassen.

### Beispiel 6: Herstellung einer Kaugummigrundmasse

In einem beheizbaren Doppel-Z-Kneter wurden 500 g homopolymeres PVAc (käuflich erhältlich bei Wacker Chemie AG unter der Bezeichnung VINNAPAS B 1.5 p; Mw 15.000) bei 120 °C zusammen mit 400 g Vinylacetat-Vinyllaurat-Copolymer (Monomer-Verhältnis-Gewicht: 60:40 ; käuflich erhältlich bei Wacker Chemie AG unter der Bezeichnung VINNAPAS B 500/40 VL) aufgeschmolzen und mit 100 g Glycerinmonostearat vermischt. Die Mischung wird aus dem Kneter entnommen und auf Raumtemperatur abkühlen gelassen.

### Beispiel 7: Herstellung einer Mischung aus VA/VL Copolymer + Triacetin (flüssiger Preblend)

500 g Vinylacetat-Vinyllaurat-Copolymer (Monomer-Verhältnis-Gewicht: 60:40; käuflich erhältlich bei Wacker Chemie AG unter der Bezeichnung VINNAPAS B 500/40 VL) wurde in einem Doppel-Z-Kneter bei 110 °C aufgeschmolzen und nach Zugabe von 500 g Triacetin wurde die Mischung ca. 30 Minuten bei ca. 100 °C geknetet. Der Preblend wurde abgekühlt und ist bei Raumtemperatur flüssig.

### Beispiel 8: Herstellung einer Kaugummigrundmasse aus dem Preblend gemäß Beispiel 7

In einem beheizbaren Doppel-Z-Kneter wurden 850 g eines Coumpounds aus PVAc + VA/VL-Copolymer (beschrieben in Beispiel 1 der Offenlegungsschrift DE 10 2007 015 941 A1) mit 150 g des Preblend aus Beispiel 7 bei 120°C homogenisiert. Die Mischung wurde aus dem Kneter entnommen und auf Raumtemperatur abkühlen gelassen.

### Beispiel 9: Herstellung eines zuckerfreien Kaugummis

In einem beheizbaren Doppel-Z-Kneter wurde bei 60 - 80°C aus den Zutaten in Tab. 1 eine Kaugummimasse hergestellt.

**Tab. 1:**

| | |
|---|---|
| Kaugummigrundmasse aus Beispiel 1 | 320 g |
| Sorbitol | 435 g |
| Lycasin (Maltitol Syrup) | 63 g |
| Xylitol | 160 g |
| Aspartam | 2 g |
| Pfefferminzöl | 15 g |
| Glyzerin | 5 g |

### Beispiel 10: Herstellung einer Kaugummigrundmasse - Vergleich 1 (gemäß US 5116626,Beispiel Tabelle 1, Spalte "D")

150 g Polyisobutylen (käuflich erhältlich bei BASF unter der Bezeichnung Oppanol B 12 SFN) wurden in einem Doppel-Z-Kneter bei 120°C mit 700 g homopolymeres PVAc , mittleres Molekulargewicht (käuflich erhältlich bei Wacker Chemie AG unter der Bezeichnung VINNAPAS B 17 p; Mw 40.000), 100 g Triacetin und 50 g hydriertes Pflanzenfett ca. 2 Stunden gemischt. Der Kneter wurde entleert und die Masse auf Raumtemperatur abkühlen gelassen.

### Beispiel 11: Herstellung einer Kaugummigrundmasse - Vergleich 2 (gemäß US 5116626, Anspruch 1)

150 g Polyisobutylen (käuflich erhältlich bei BASF unter der Bezeichnung Oppanol B 12 SFN) wurden in einem Doppel-Z-Kneter bei 120°C mit 650 g homopolymeres PVAc , niedriges Molekulargewicht (käuflich erhältlich bei Wacker Chemie AG unter der Bezeichnung VINNAPAS B 1.5 p; Mw 15.000), 100 g Triacetin und 100 g Vinylacetat-Vinyllaurat-Copolymer (Monomer-Verhältnis-Gewicht: 60:40 ; käuflich erhältlich bei Wacker Chemie AG unter der Bezeichnung VINNAPAS B 500/40 VL) ca. 2 Stunden gemischt. Der Kneter wurde entleert und die Masse auf Raumtemperatur abkühlen gelassen.

### Beispiel 12: Herstellung von Kaugummi aus der erfindungsgemäßen Kaugummigrundmasse (Beispiel 3) und Vergleichsmasse aus Beispiel 10 und 11.

Aus den in Tabelle 2 genannten Zutaten (alle Angaben in Gewichts %) wurden bei 60°C in einem Doppel-Z-Kneter innerhalb von 30 Minuten eine Kaugummimasse hergestellt. Die Kaugummimasse wurde auf eine Schichtdiche von ca. 2 mm gewalzt und in Streifen geschnitten mit einem Gewicht von ca. 1,5 Gramm.

**Tab. 2:**

| | Kaugummi A (aus erfindungsgemäßer Grundmasse) | Kaugummi B (Vergleich 1) | Kaugummi C (Vergleich 2) |
|---|---|---|---|
| Grundmasse Beispiel 3 | 32,0 | --- | --- |
| Grundmasse Beispiel 10 | --- | 32,0 | --- |
| Grundmasse Beispiel 11 | --- | --- | 32,0 |
| Sorbitol | 40,9 | 40,9 | 40,9 |
| Lycasin-Maltit-syrup | 9,0 | 9,0 | 9,0 |
| Xylitol | 13,6 | 13,6 | 13,6 |
| Aspartam | 0,1 | 0,1 | 0,1 |
| Sucralose | 0,05 | 0,05 | 0,05 |
| Glycerin | 1,0 | 1,0 | 1,0 |
| Pefferminz-Aroma | 1,0 | 1,0 | 1,0 |
| Kirsch-Aroma | 1,5 | 1,5 | 1,5 |
| Zitronensäure | 0,8 | 0,8 | 0,8 |

### Beispiel 13:Vergleichstest der Klebrigkeit von Kaugummi A, B und C auf Beton

Die zum Testen verwendeten Betonsteine (25 cm x 20 cm x 10 cm) wurden mit einem Hochdruckreiniger ca. 2-3 Minuten gewaschen und anschließend getrocknet. Die Kaugummi (A, B , C) wurden jeweils 20 Minuten gekaut und der gekaute Kaugummi, der überwiegend aus der Kaugummigrundmasse besteht in die Mitte eines Betonsteines plaziert. Der Kaugummi wird mit einem silikonisiertem Papier abgedeckt. Anschließend wird für ca. 2 Sekunden das Silikonpapier mit dem Kaugummi darunter durch eine Person belastet. Das Silikonpapier wird abgezogen und der Betonstein mit dem Kaugummi für 4 Wochen bei Raumtemperatur gelagert.

Der Betonstein wird nach der Lagerzeit mit einem Hochdruckreiniger jeweils 60 Sekunden gereinigt. Bei beiden Vergleichsbeispielen wurden Reste (ca. 5-10% der ursprünglichen Menge) an Kaugummi auf der Betonoberfläche festgestellt, während sich der erfindungsgemäß hergestellte Kaugummi vollständig entfernen ließ.

## Patentansprüche

1. Homogene Zusammensetzung bestehend aus Polyvinylacetat in einer Menge von 25 - 90 Gew.-%, Vinyllaurat-Vinylacetat-Copolymer in einer Menge von 5 - 70 Gew.-%, sowie einem Weichmacher in einer Menge von 1% - 15 Gew.-% jeweils bezogen auf das Gesamtgewicht der Zusammensetzung.

2. Homogene Zusammensetzung gemäß Anspruch 1, **dadurch gekennzeichnet, dass** sie zu 30 - 70 Gew.-%, besonders bevorzugt zu 43 - 60 Gew.-% aus Polyvinylacetat besteht und zu 20 - 50 Gew.-%, besonders bevorzugt zu 30 - 45 Gew.-% aus Vinyllaurat-Vinylacetat-Copolymer besteht und zu 5- 13 Gew.-% aus Weichmacher besteht.

3. Homogene Zusammensetzung gemäß Anspruch 1 oder 2, **dadurch gekennzeichnet, dass** das Polyvinylacetat ein gewichtsmittleres Molekulargewicht Mw von 10.000 bis 60.000 besitzt und das Vinylacetat-Vinyllaurat-Copolymerisats ein gewichtsmittleres Molekulargewicht Mw von 100.000 bis 600.000 besitzt.

4. Homogene Zusammensetzung gemäß Anspruch 1, 2 oder 3, **dadurch gekennzeichnet, dass** der Weichmacher aus der Gruppe Diacetin, Triacetin, Acetem, Glycerinmonostearat ausgewählt ist und es sich bevorzugt um Triacetin oder Acetem und besonders bevorzugt um Triacetin handelt.

5. Verfahren zur Herstellung einer homogenen Zusammensetzung gemäß einem der Ansprüche 1 bis 4, durch ein Zusammengeben der Komponenten Polyvinylacetat, Vinylacetat-Vinyllaurat-Copolymerisat und Weichmacher in einem diskontinuierlichen oder einem kontinuierlichen Verfahren bei einer Temperatur von 80 - 130°C, bevorzugt 90 - 120°C über einen Zeitraum von 30 bis 100 Minuten.

6. Verfahren zur Herstellung einer homogenen Zusammensetzung gemäß einem der Ansprüche 1 bis 4, durch Herstellung eines flüssigen Preblends bestehend aus einem VL/VA-Copolymer und einem Weichmacher im Gewichtsverhältnis 1:2 bis 2:1 sowie eines festen Preblends bestehend aus PVAc und VL/VA-Copolymer und Vermischen des flüssigen Preblends und des festen Preblends in einem diskontinuierlichen oder einem kontinuierlichen Verfahren bei einer Temperatur von 80 - 130°C, bevorzugt 90 - 120°C über einen Zeitraum von 30 bis 100 min.

7. Verfahren zur Herstellung eines Kaugummis enthaltend eine Zusammensetzung gemäß Anspruch 1 bis 4 sowie entweder Zucker, Syrup, Geschmacksstoffe und gegebenenfalls Farbstoffe, Fruchtsäuren, Süßstoffe, Feuchthaltemittel oder Polyole, Geschmacksstoffe, Süßstoffe und gegebenenfalls Farbstoffe, Fruchtsäuren, Feuchthaltemittel, **dadurch gekennzeichnet, dass** bei ca. 60°C eine homogene Zusammensetzung gemäß Anspruch 1 bis 4 mit Polyolen oder Zucker und Syrup und Geschmacksstoffen und ggf. Farbstoffen, Fruchtsäuren, Süßstoffen gemischt werden.

8. Verwendung einer Zusammensetzung gemäß Anspruch 1 bis 4 als Kaugummigrundmasse.

## Claims

1. Homogeneous composition comprising polyvinyl acetate in an amount of 25-90% by weight, vinyl laurate-vinyl acetate copolymer in an amount of 5-70% by weight, and a softener in an amount of 1%-15% by weight, in each case based on the total weight of the composition.

2. Homogeneous composition according to Claim 1, **characterized in that** it is 30-70% by weight, particularly preferably 43-60% by weight, composed of polyvinyl acetate, and 20-50% by weight, particularly preferably 30-45% by weight, composed of vinyl laurate-vinyl acetate copolymer, and 5-13% by weight composed of softener.

3. Homogeneous composition according to Claim 1 or 2, **characterized in that** the polyvinyl acetate has a weight-average molecular weight Mw from 10 000 to 60 000, and the vinyl acetate-vinyl laurate copolymer has a weight-average molecular weight Mw from 100 000 to 600 000.

4. Homogeneous composition according to Claim 1, 2 or 3, **characterized in that** the softener is selected from the group consisting of diacetin, triacetin, acetem, glycerol monostearate, and is preferably triacetin or acetem, and particularly preferably triacetin.

5. Method for producing a homogeneous composition according to any one of Claims 1 to 4, by mixing together the components polyvinyl acetate, vinyl acetate-vinyl laurate copolymer and softener in a batch or continuous method at a temperature of 80-130°C, preferably 90-120°C, over a period of 30 to 100 minutes.

6. Method for producing a homogeneous composition according to any one of Claims 1 to 4, by producing a liquid preblend comprising a VL/VA copolymer and a softener in the weight ratio 1:2 to 2:1, and a solid preblend comprising PVAc and VL/VA copolymer and mixing the liquid preblend and the solid preblend in a batch or continuous method at a temperature of 80-130°C, preferably 90-120°C, over a period of 30 to 100 min.

7. Method for producing a chewing gum containing a composition according to Claims 1 to 4 and either sugar, syrup, flavorings and optionally dyes, fruit acids, sweeteners, humectants or polyols, flavorings, sweeteners and optionally dyes, fruit acids, humectants, **characterized in that**, at approximately 60°C, a homogeneous composition according to Claims 1 to 4 is mixed with polyols or sugar and syrup and flavorings and optionally dyes, fruit acids, sweeteners.

8. Use of a composition according to Claims 1 to 4 as gum base.

## Revendications

1. Composition homogène constituée par du poly(acétate de vinyle) en une quantité de 25-90% en poids, un copolymère de laurate de vinyle-acétate de vinyle en une quantité de 5-70% en poids, ainsi que par un plastifiant en une quantité de 1-15% en poids, à chaque fois par rapport au poids total de la composition.

2. Composition homogène selon la revendication 1, **caractérisée en ce qu'**elle est constituée à raison de 30-70% en poids, de manière particulièrement préférée à raison de 43-60% en poids, de poly(acétate de vinyle) et à raison de 20-50% en poids, de manière particulièrement préférée à raison de 30-45% en poids, de copolymère de laurate de vinyle-acétate de vinyle et à raison de 5-13% en poids de plastifiant.

3. Composition homogène selon la revendication 1 ou 2, **caractérisée en ce que** le poly(acétate de vinyle) présente un poids moléculaire pondéral moyen Mw de 10 000 à 60 000 et le copolymère d'acétate de vinyle-laurate de vinyle présente un poids moléculaire pondéral moyen Mw de 100 000 à 600 000.

4. Composition homogène selon la revendication 1, 2 ou 3, **caractérisée en ce que** le plastifiant est choisi dans le groupe formé par la diacétine, la triacétine, l'Acetem, le monostéarate de glycérol et il s'agit de préférence de triacétine ou d'Acetem et de manière particulièrement préférée de triacétine.

5. Procédé pour la préparation d'une composition homogène selon l'une quelconque des revendications 1 à 4, par réunion des composants poly(acétate de vinyle), copolymère d'acétate de vinyle-laurate de vinyle et plastifiant dans un procédé discontinu ou continu à une température de 80-130°C, de préférence de 90-120°C sur un laps de temps de 30 à 100 minutes.

6. Procédé pour la préparation d'une composition homogène selon l'une quelconque des revendications 1 à 4, par préparation d'un prémélange liquide constitué par un copolymère de VL/VA et un plastifiant dans un rapport pondéral de 1:2 à 2:1 ainsi que d'un prémélange solide constitué de PVAc et de copolymère VL/VA et par le mélange du prémélange liquide et du prémélange solide dans un procédé continu ou discontinu à une température de 80-130°C, de préférence de 90-120°C sur un laps de temps de 30 à 100 min.

7. Procédé pour la préparation d'une gomme à mâcher contenant une composition selon la revendication 1 à 4 ainsi que soit du sucre, du sirop, des agents gustatifs et le cas échéant des colorants, des acides de fruits, des édulcorants, des humectants, soit des polyols, des agents gustatifs, des édulcorants et le cas échéant des colorants, des acides de fruits, des humectants, **caractérisé en ce qu'**on mélange à environ 60°C une composition homogène selon la revendication 1 à 4 avec des polyols ou du sucre et du sirop et des agents gustatifs et le cas échéant des colorants, des acides de fruits, des édulcorants.

8. Utilisation d'une composition selon l'une quelconque des revendications 1 à 4 comme masse de base pour gomme à mâcher.
